(19) Europäisches Patentamt
European Patent Office
Office européen des brevets

(11) EP 1 130 760 B1

(12) EUROPÄISCHE PATENTSCHRIFT

(45) Veröffentlichungstag und Bekanntmachung des Hinweises auf die Patenterteilung:
07.05.2008 Patentblatt 2008/19

(51) Int Cl.:
*H02P 6/08* (2006.01)

(21) Anmeldenummer: 01103720.7

(22) Anmeldetag: 15.02.2001

(54) **Frequenzumrichter**

Frequency converter

Convertisseur de fréquence

(84) Benannte Vertragsstaaten:
**AT BE CH CY DE DK ES FI FR GB GR IE IT LI LU MC NL PT SE TR**

(30) Priorität: 01.03.2000 DE 10009813

(43) Veröffentlichungstag der Anmeldung:
05.09.2001 Patentblatt 2001/36

(73) Patentinhaber: Diehl AKO Stiftung & Co. KG
88239 Wangen (DE)

(72) Erfinder: Zinke, Michael
88239 Wangen im Allgäu (DE)

(74) Vertreter: Diehl Patentabteilung
c/o Diehl Stiftung & Co. KG
Stephanstrasse 49
90478 Nürnberg (DE)

(56) Entgegenhaltungen:
EP-A- 0 881 760    US-A- 5 408 150
US-A- 5 627 460

**Beschreibung**

Die Erfindung betrifft einen Frequenzumrichter mit den Merkmalen des Oberbegriffs des Patentanspruchs 1.

Eine Halbleiter-Leistungsschaltung, die für einen Frequenzumrichter im Prinzip geeignet ist, ist in der DE 198 17 767 A1 beschrieben. Eine Treiberschaltung für Leistungs-Halbleiterbauteile, wie IGBT und MOSFETs, ist aus der DE 196 41 840 A1 bekannt.

Bei einem Frequenzumrichter für einen Elektromotor liegt mindestens ein Klemmenanschluss jeder Motorwicklung an einer Halbbrückenschaltung, die aus zwei hintereinander geschalteten Leistungsschaltern, wie IGBT oder MOSFETs, besteht. Die Leistungsschalter werden an ihren Steueranschlüssen über eine Treiberschaltung von einer Steuerelektronik abwechselnd durchgeschaltet und gesperrt. Die Ansteuerleistung stammt aus einer zusätzlichen Spannungsquelle, wobei beim einen der Leistungsschalter eine Bootstrap-Schaltung mit einem Bootstrap-Kondensator zur Verwendung kommt, der über eine Diode aufgeladen wird.

Werden die Leistungsschalter nur zur Kommutierung der Motorspannung benutzt, dann muss der Bootstrap-Kondensator die Ansteuerspannung für den einen Leistungsschalter während der Dauer einer halben Motorumdrehung (bei einphasigen Motoren) liefern.

Zur Drehzahlsteuerung steuert die Steuerelektronik den einen Leistungsschalter zusätzlich mit einem PWM-Si.gnal (Pulsweitenmodulation). Der Bootstrap-Kondensator wird dann ungünstigerweise entladen, wenn nach dem Abschalten aller Leistungsschalter und vor dem Abkommutieren des Motorstroms sofort wieder das PWM-Signal einsetzt.

Die Kapazität des Bootstrap-Kondensators muss nach dem Stand der Technik daher so dimensioniert werden, dass bis zum Abkommutieren des Motorstromes vom Bootstrap-Kondensator eine für ein vollständiges Durchschalten des Leistungsschalters ausreichende Spannung geliefert wird. In der Praxis muss hierfür ein teurer und räumlich großer Elektrolytkondensator verwendet werden. Insbesondere sind oberflächenmontierbare Elektrolyt-Kondensatoren (SMD-Technik) besonders teuer.

Zur Reduzierung der notwendigen dynamischen Ansteuerleistung und damit der Kapazität des Bootstrap-Kondensators wurde vorgeschlagen, nach dem Abschalten der Leistungsschalter die Ansteuerung des nach der Kommutierung einzuschaltenden Leistungsschalters erst nach Ablauf einer festen Totzeit freizugeben. Da jedoch die tatsächliche Kommutierungszeit stark von der jeweiligen Drehzahl und Belastung des Motors abhängt, ist die Totzeit entweder zu kurz, wenn der Bootstrap-Kondensator nicht auf die maximale Kommutierungszeit dimensioniert ist, oder die Totzeit ist zu lang, so dass die Ansteuerung des Leistungshalbleiters auch noch über den Zeitpunkt der tatsächlichen Kommutierung des Motorstroms hinaus unterdrückt wird. Dadurch wird für die Ansteuerung der Leistungshalbleiter an sich zur Verfügung stehende Zeit nicht genutzt, was zu einem Drehmomentverlust bzw. zu einer erhöhten Drehmomentwelligkeit führen kann.

Frequenzumrichter gemäß dem Oberbegriff des Anspruchs 1 sind ferner aus den US-Patenten Nr. 5,627,460 und Nr. 5,408,150 bekannt.

Im Fall der US-A-5,627,460 werden ein oberer und ein unterer Leistungsschalter immer genau entgegengesetzt geschaltet und gesperrt. Im Fall eines zu niedrigen Ladungsniveaus des Bootstrap-Kondensators, welches durch eine entsprechende Bootstrap-Steuerung überwacht wird, kann der Bootstrap-Kondensator während des fortgeführten Betriebs des Frequenzumrichters durch eine Veränderung der relativen Einschattdauern der Leistungstransistoren wieder aufgeladen werden.

Bei der US-A-5,408,1 150 wird einerseits verhindert, dass der obere und der untere Leistungsschalter beide gleichzeitig leitend sind, indem der Leitungs/Sperrzustand der Leistungstransistoren überwacht wird, und andererseits kann der Bootstrap-Kondensator bei leitendem Leistungstransistor durch Verringern der zusätzlichen Spannungsversorgung wieder aufgeladen werden. Aufgabe der Erfindung ist es, einen Frequenzumrichter der eingangs genannten Art vorzuschlagen, bei dem die zur Ansteuerung des Leistungsschalters nötige Ansteuerleistung verringert ist.

Obige Aufgabe wird durch einen Frequenzumrichter mit den Merkmalen des Anspruchs 1 gelöst.

Durch die genannten Merkmale sind Betriebszustände vermieden, in denen der Bootstrap-Kondensator unnötig entladen wird. Er muss dementsprechend nur eine verringerte Ansteuerleistung decken. Seine Kapazität kann deshalb kleiner als beim Stand der Technik sein. Damit ist es möglich, als Bootstrap-Kondensator einen kostengünstigeren und baulich kleineren Kondensator zu verwenden. Im Idealfall ist es nicht notwendig, einen Elektrolytkondensator einzusetzen. Es kann ein kostengünstiger oberflächenmontierbarer Kondensator (SMD-Technik) verwendet werden. Dies vereinfacht die Fertigung der Baugruppe "Frequenzumrichter" erheblich.

Vorteilhafte Ausgestaltungen der Erfindung ergeben sich aus den Unteransprüchen und der folgenden Beschreibung eines Ausführungsbeispiels. In der Zeichnung zeigen:

Figur 1 ein Blockschaltbild eines Frequenzumrichters mit einem Motor,

Figur 2 Spannungsdiagramme.

Ein einphasiger Motor weist eine Wicklung 1 und einen Rotor 2 mit einem Nordpol N und einem Südpol S auf. Dem Rotor 2 ist ein Sensor 3, beispielsweise Hallsensor, zur Erfassung der Rotorposition zugeordnet. Der Sensor 3 ist über eine Signalleitung 4 an eine Steuerelektronik 17 angeschlossen, die die Kommutierung und die Drehzahl des Motors steuert. An Klemmen der Motorwicklung 1 werden die Klemmspannungen VOUT und VOUT' abgegriffen und über Signalleitungen 5 und 5' an die Steuerelektronik 17 gelegt.

Die Klemme VOUT ist an den Abgriff einer Halbbrücke angeschlossen, die aus der Reihenschaltung eines oberen Leistungsschalters 6 und eines unteren Leistungsschalters 7 besteht. Der obere Leistungsschalter 6 liegt an einer positiven Versorgungsgleichspannung VDD. Der untere Leistungsschalter 7 liegt an Masse GND.

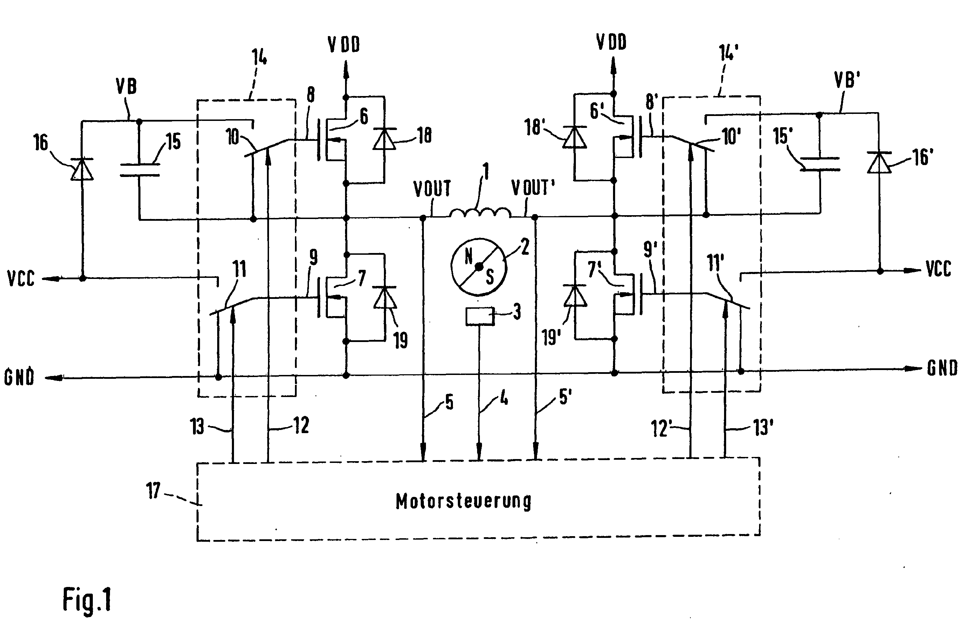

Symmetrisch hierzu ist an die Klemme VOUT' eine weitere Halbbrücke mit einem oberen Leistungsschalter 6' und einem unteren Leistungsschalter 7' geschaltet (vgl. Fig.1). Die Leistungsschalter 6,7,6',7' sind Halbleiterschalter, beispielsweise IGBTs oder MOSFETs. Den Leistungsschaltern 6,7,6',7' ist jeweils eine Freilaufdiode 18,19,18',19' parallelgeschaltet, die umgekehrt zur Hauptdurchlassrichtung der Leistungsschalter gepolt sind. Sind die Leistungsschalter MOSFETs, können die separaten Freilaufdioden entfallen, da der MOSFET selbst die Freilaufdiodenfunktion beinhaltet.

Die Leistungsschalter 6,7 werden über eine Treiberschaltung 14 gesteuert, die elektronische Schalter 10,11 beinhaltet, welche über Leitungen 12,13 von der Steuerelektronik 17 schaltbar sind. Entsprechend ist an den Steueranschlüssen 8',9' der Leistungsschalter 6', 7' eine Treiberschaltung 14' mit Schaltern 10',11' vorgesehen, die über Leitungen 12',13' von der Steuerelektronik 17 steuerbar sind. In Figur 1 sind die Schalter 10,11,10',11' im an Masse GND liegenden, sperrenden Zustand gezeigt. Die Leistungsschalter sind also nichtleitend.

Eine zusätzliche Spannungsversorgung VCC ist vorgesehen, um die Leistungsschalter 6,7,6',7' leitend zu schalten, wenn der betreffende Schalter 10,11,10',11' umgeschaltet ist. Die Steueranschlüsse 9,9' der Leistungsschalter 7,7' liegen dann an der Spannungsversorgung VCC und werden direkt aus dieser gespeist.

Zur Versorgung der Steueranschlüsse 8,8' der Leistungsschalter 6,6' mit einer Ansteuerspannung VB bzw. VB' ist je ein Bootstrap-Kondensator 15 bzw. 15' vorgesehen, der über eine Diode 16,16' aus der Spannungsversorgung VCC geladen wird. Der Bootstrap-Kondensator 15 bzw. 15' liegt einerseits an der Diode 16 bzw. 16' und andererseits an der Klemme VOUT bzw. VOUT'.

Die Funktionsweise der beschriebenen Schaltung ist etwa folgende:

Um die Leistungsschalter 6,7 abwechselnd durchzusteuern, werden die Steueranschlüsse 8,9, gesteuert durch die Steuerelektronik 17, abwechselnd auf positives Potential (Leistungsschalter durchgesteuert) und auf ein Bezugspotential (Leistungsschalter gesperrt) gelegt. Die erforderliche positive Spannung für den unteren Leistungsschalter 7 stammt aus der zusätzlichen Spannungsversorgung VCC. Die positive Spannung für den oberen Leistungsschalter 6 wird von der Bootstrap-Schaltung geliefert. Dabei wird der Kondensator 15 bei leitendem unteren Leistungsschalter 7 in etwa auf den Wert der Spannungsversorgung VCC geladen. In der Sperrphase des unteren Schalters 7 wird die auf das Bezugspotential VOUT bezogene Kondensatorspannung VB zum Durchschalten des oberen Leistungsschalters 6 verwendet. Beim Durchschalten des oberen Leistungsschalters 6 wird das Bezugspotential VOUT der Motorklemme nahezu auf das Potential VDD angehoben. Die Diode 16 verhindert dabei, dass der Kondensator 15 entladen wird, wenn das Bezugspotential VOUT ansteigt.

Entsprechendes gilt für die den oberen Leistungsschalter 6' und den unteren Leistungsschalter 7' aufweisende andere Halbbrücke.

über die beiden Halbbrücken wird die Rotordrehzahl geregelt, indem über die Pulsweitenmodulation (PWM) der Strom und damit das geforderte Drehmoment gestellt wird und phasenrichtig zur Rotorstellung die Motorstromrichtung gesteuert wird (Kommutierung). Die Steuerelektronik 17 leitet die Kommutierung des Motorstromes in Abhängigkeit von der vom Sensor 3 erfassten Rotorstellung ein, indem zunächst alle Leistungsschalter abgeschaltet werden. Zur Steuerung der Motorspannung und damit des Motorstromes mit daraus resultierendem Drehmoment legt die Steuerelektronik 17 an den oberen Leistungsschalter 6 bzw. 6' ein pulsweitenmoduliertes Signal. Würde dieses pulsweitenmodulierte Signal kurz nach dem Abschalten aller Leistungsschalter und vor dem Beendigen der Kommutierung (Abkommutieren) des Motorstromes sofort wieder beginnen, dann würde der Bootstrap-Kondensator 15 entladen und zwar nicht nur durch Leckströme der Diode 16, der Treiberschaltung 14, des Steueranschlusses 8 und des Kondensators 15 selbst, sondern zusätzlich noch durch die kapazitiven Ströme, die beim Umladen der Kapazität des Steueranschlusses 8 des Leistungsschalters 6 auftreten. Dies ist durch die im Folgenden beschriebenen Maßnahmen vermieden.

Bei der in Figur 1 dargestellten H-Brückenschaltung werden die Potentiale der Klemmen VOUT und VOUT' der Motorwicklung 1 über die Leitungen 5,5' an die Steuerelektronik 17 gelegt. Die Steuerelektronik 17 kann dadurch die Beendigung eines über die Freilaufdioden 18,18' bzw. eines inversen, d.h. entgegen der Durchlassrichtung gerichteten, Stromflusses durch die oberen Leistungsschalter 6,6' erkennen. Erst nach der Beendigung dieser Stromflussrichtung legt die Steuerelektronik 17 das pulsweitenmodulierte Signal an die oberen Leistungsschalter 6,6'.

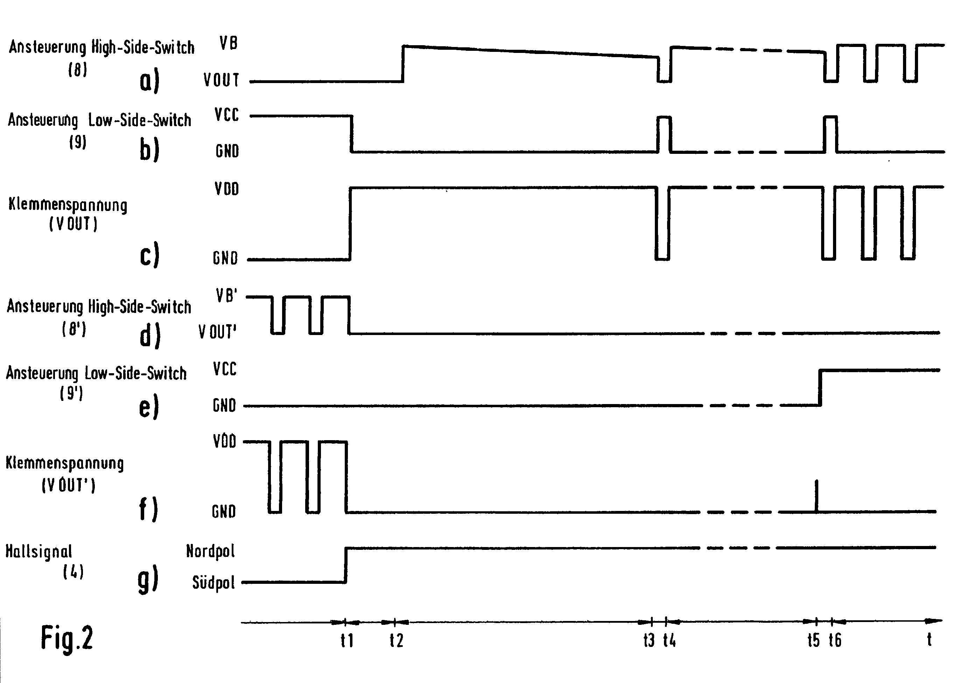

Die auf die Zeit t bezogenen Diagramme der Figur 2 zeigen Spannungsverläufe vor, während und nach einer Kommutierungsphase. Im einzelnen zeigt:

a) den Spannungsverlauf am Steueranschluss 8,
b) den Spannungsverlauf am Steueranschluss 9,
c) die Klemmenspannung VOUT,
d) den Spannungsverlauf am Steueranschluss 8',

e) den Spannungsverlauf am Steueranschluss 9',
f) die Klemmenspannung VOUT' und
g) den Spannungsverlauf am Sensor 3.

Vor dem Zeitpunkt t1 liegt der Steueranschluss 8 auf dem Bezugspotential VOUT, der Leistungsschalter 6 ist also gesperrt. Der Steueranschluss 9 liegt auf dem Potential VCC, wodurch der Leistungsschalter 7 leitend ist. Dementsprechend liegt die Klemmenspannung VOUT bei GND, d.h. Masse. Der Steueranschluss 8' ist vom pulsweitenmodulierten Signal der Steuerelektronik 17 getaktet, so dass sein Potential zwischen VB' und VOUT' hin und her geschaltet wird, und der Leistungsschalter 6' entsprechend leitet und sperrt. Dementsprechend verläuft die Klemmenspannung VOUT' getaktet zwischen VDD und GND. Sie liegt bei VDD, wenn der obere Leistungsschalter 6' leitet. Sie liegt bei GND, wenn der obere Leistungsschalter 6' sperrt; in diesem Fall fließt der Motorstrom über die Freilaufdiode 19' des Leistungsschalters 7' bzw. diesen selbst, wenn er einen Inversbetrieb ermöglicht, was bei MOSFETs der Fall ist. Dem Sensor 3 steht der magnetische Südpol des Rotors 2 gegenüber.

Infolge der Drehung des Rotors 2 wechselt zum Zeitpunkt t1 die Polarität des dem Sensor 3 gegenüberstehenden Magnetfeldes des Rotors 2 von Süd nach Nord. Dies erkennt die Steuerelektronik 17 und löst die Kommutierung des Motorstroms aus, indem sie zunächst alle vier Leistungsschalter 6,6',7,7' sperrt. Der durch die Wicklung 1 fließende Motorstrom kommutiert nun auf den oberen Leistungsschalter 6 und den unteren Leistungsschalter 7', wobei er über die diesen parallelgeschalteten Freilaufdioden 18,19' fließt, bzw. im Inversbetrieb über die Leistungsschalter 6,7' selbst fließt, wenn diese einen Stromfluss entgegen der Hauptdurchlassrichtung (Inversbetrieb) zulassen.

Nach Ablauf einer fest vorgegebenen, minimalen Kommutierungszeit, d.h. zum Zeitpunkt t2. wird nun nicht mit dem Takten des oberen Leistungsschalters 6 begonnen, damit die damit verbundenen, oben genannten Nachteile vermieden werden. Statt dessen wird zum Zeitpunkt t2 der obere Leitungsschalter 6 dauerhaft leitend geschaltet und die Klemmenspannung VOUT' wird von der Steuerelektronik 17 ausgewertet. Die Leistungsschalter 7.6',7' sind gesperrt. Der Motorstrom fließt über die Freilaufdioden 18 und 19', die den Leistungsschaltern 6.7' parallelgeschaltet sind bzw. über diese Leistungsschalter 6,7' selbst, wenn diese einen Inversbetrieb zulassen. Solange der Motorstrom in dieser Weise fließt, ist die von der Steuerelektronik 17 erfasste Spannung VOUT' geringfügig negativer als GND:

$$VOUT' < GND \qquad (1).$$

Zum Zeitpunkt t5 wird der durch die Motorwicklung 1 fließende Strom zu Null. Es liegt nun an den Anschlüssen VOUT und VOUT' der Motorwicklung 1 nur die aufgrund der Drehung des Rotors 2 induzierte EMK an. Für den Wert dieser Spannung gilt:

$$/EMK/ < VDD \qquad (2).$$

Da nun die Klemme VOUT der Motorwicklung 1 über den oberen Leistungsschalter 6 auf nahezu VDD-Potential gelegt ist, liegt an der Motorklemme VOUT' die Spannung VDD + EMK an. Mit (2) folgt daraus:

$$VOUT' > GND \qquad (3).$$

Dies ist dem Spannungsdiagramm f der Figur 2 beim Zeitpunkt t5 dargestellt. Die Steuerelektronik 17 erkennt also durch Auswerten der Klemmenspannung VOUT', ob der Motorstrom noch über die dem oberen Leistungsschalter 6 parallelgeschaltete Freilaufdiode 18 bzw. diesen selbst, wenn er einen Inversbetrieb zulässt, fließt (VOUT'< GND) oder ob dies nicht mehr der Fall ist (VOUT > GND). Danach leitet dann die Steuerelektronik 17 das Takten des oberen Leistungsschalters 6 ein, was in Figur 2 nach dem Zeitpunkt t6 gezeigt ist. Wenn der Leistungsschalter 6 getaktet wird, werden von der Steuerelektronik 17 die Leistungsschalter 7 und 6' gesperrt und der Leistungsschalter 7' wird leitend geschaltet.

Die Figur 2 zeigt die Spannungsverhältnisse, die bei einem vom Sensor 3 erfassten Magnetfeldwechsel von Süd nach Nord auftreten. Entsprechendes gilt für den bei der weiteren Drehung des Rotors 2 auftretenden Magnetfeldwechsels von Nord nach Süd.

Da der Bootstrap-Kondensator 15 bzw. 15' nicht nur durch die kapazitiven Ströme beim Takten des oberen Leistungsschalters 6 bzw. 6' entladen wird, sondern auch infolge ohmscher Leckströme entladen wird, kann die Steuerelektronik 17 nicht beliebig lange warten, bis zum Zeitpunkt t5 der Motorstrom zu Null wird. Denn sonst würde die Ansteuerspannung VB bzw. VB' des oberen Leistungsschalters 6 bzw. 6' so weit absinken, dass der Kondensator 15 bzw. 15' den oberen Leistungsschalter 6 bzw. 6' nicht mehr sauber durchschalten kann. Um ein sicheres Durchschalten zu gewährleisten, wird der Bootstrap-Kondensator 15 bzw. 15' zyklisch nachgeladen, bevor die Ansteuerspannung VB bzw. VB' einen kritischen unteren Wert erreicht. Dazu wird zu einem fest vorgegebenen Zeitpunkt t3, der vor dem Zeitpunkt t5 liegt, der obere Leistungsschalter 6 bzw. 6' gesperrt und nach einer kurzen Totzeit wird der untere Leistungsschalter 7 leitend geschaltet (vgl. Fig.2a,b,c). Dadurch wird der Bootstrap-Kondensator 15 nachgeladen. Zum Zeitpunkt t4 ist er vollständig geladen und der untere Leistungsschalter 7 wird wieder gesperrt und danach der obere Leistungsschalter 6 wieder leitend geschaltet.

Eine für die Zeitpunkte t3 und t4 beschriebene Nachladung kann zwischen den Zeitpunkten t2 und t5 auch zyklisch mehrmals vorgenommen werden.

Damit der Bootstrap-Kondensator 15 zum Zeitpunkt t6, zu dem das Takten des oberen Leistungsschalters 6 beginnt, vollständig geladen ist, wird der oben erläuterte Nachladevorgang durchgeführt, nachdem die Steuerelektronik 17 erkannt hat, dass VOUT' > GND ist (Zeitpunkt t5). Es wird hierzu zum Zeitpunkt t5 der obere Leistungsschalter 6 gesperrt und nach einer kurzen Totzeit wird der untere Leistungsschalter 7 eingeschaltet. Zum Zeitpunkt t6 ist dann der Bootstrap-Kondensator 15 wieder vollständig geladen und der untere Leistungsschalter 7 wird wieder gesperrt, Es beginnt dann das Takten des oberen Leistungsschalters 6 mit dem pulsweitenmodulierten Signal. Während des pulsweitenmodulierten Signals wird dann der Bootstrap-Kondensator 15 in jeder Periode zyklisch nachgeladen.

Es ist nicht ausgeschlossen, dass in der Schaltung ein Fehler entsteht, der dazu führt, dass der Zeitpunkt t5, d.h. VOUT' > GND, nicht in einem üblichen Zeitrahmen erreicht wird. Für diesen Fall kann vorgesehen sein, dass die Steuerelektronik 17 die Zeitspanne zwischen t1 bzw. t2 und t5 überwacht und beim Überschreiten eines Maximalwertes eine Sicherheitsabschaltung des Motors auslöst.


**Patentansprüche**

1. Frequenzumrichter, insbesondere für einen Elektromotor, mit einer Steuerelektronik (17) zur Steuerung von Leistungsschaltern (6,6',7,7') in wenigstens einer Halbbrücke, wobei wenigstens einer der Leistungsschalter (6,6') seine Ansteuerleistung aus einem Bootstrap-Kondensator (15,15') erhält, und dieser Leistungsschalter oder ein anderer der Leistungsschalter von der Steuerelektronik (17) , insbesondere zur Drehzahlsteuerung, taktbar ist,
   **dadurch gekennzeichnet,**
   **dass** die Steuerelektronik (17) nach einem Sperren aller Leistungsschalter (6, 6',7, 7') zur kommutierung des Motorstroms Verfasst, ob der Motorstrom in Durchlassrichtung der Leistungsschalter(6,6',7,7') oder dieser entgegen fließt, und dass die Steuerelektronik(17) das Takten des über dem Bootstrapkondensator (15,15') angesteuerten Leistungsschalters (6,6') unterdrückt, solange der Motorstrom entgegen der Durchlassrichtung fließt.

2. Frequenzumrichter nach Anspruch 1,
   **dadurch gekennzeichnet,**
   **dass** die Steuerelektronik(17) die Stromflussrichtung aus einer Messung der Spannung der Klemmen (VOUT,VOUT') der Motorwicklung(1) erfasst.

3. Frequenzumrichter nach Anspruch 1 oder 2,
   **dadurch gekennzeichnet,**
   **dass** der Strom entgegen der Durchlassrichtung über eine dem Leistungsschalter(6,6',7,7') parallelgeschaltete Freilaufdiode(18,18',19,19') oder durch den Leistungsschalter(6,6',7,7') im Inversbetrieb fließt.

4. Frequenzumrichter nach einem der vorhergehenden Ansprüche,
   **dadurch gekennzeichnet,**
   **dass** die Steuerelektronik(17) den vom Bootstrap-Kondensator(15,15') gespeisten oberen Leistungsschalter (6;6') der einen Halbbrücke bei der Motorstromkommutierung nichttaktend, statisch ansteuert und sie einen Stromfluss entgegen der Durchlassrichtung dadurch erkennt, dass von ihr bei gesperrtem oberen und unteren Leistungsschalter(6',7';6,7) der anderen Halbbrücke eine Spannung unterhalb eines Schwellwerts (GND) gemessen wird.

5. Frequenzumrichter nach einem der vorhergehenden Ansprüche,
   **dadurch gekennzeichnet,**
   **dass** die Steuerelektronik(17) den vom Bootstrap-Kondensator(15,15') gespeisten oberen Leistungsschalter (6;6') der einen Halbbrücke bei der Motorstromkommutierung nichttakend, statisch ansteuert und sie das Ende eines Stromflusses entgegen der Durchlassrichtung dadurch erkennt, dass von ihr bei gesperrtem oberen und unteren Leistungsschalter(6',7';6,7) der anderen Halbbrücke eine Spannung oberhalb eines Schwellwerts (GND) gemessen wird.

6. Frequenzumrichter nach einem der vorhergehenden Ansprüche,
   **dadurch gekennzeichnet,**
   **dass** der Bootstrap-Kondensator(15,15') während der Kommutierung nachgeladen wird.

7. Frequenzumrichter nach Anspruch 6,
   **dadurch gekennzeichnet,**
   **dass** die Nachladung in regelmäßigen Zeitabständen, zyklisch erfolgt.

8. Frequenzumrichter nach Anspruch 6 oder 7,
   **dadurch gekennzeichnet,**
   **dass** die Nachladung zusätzlich unmittelbar vor dem Beginn der getakteten Ansteuerung des Leistungshalbleiters erfolgt.

9. Frequenzumrichter nach einem der vorhergehenden Ansprüche,
   **dadurch gekennzeichnet,**
   **dass** die Steuerelektronik(17) eine Sicherheitsabschaltung auslöst, wenn die Unterdrückung des Taktens (Zeitpunkt t1 bis t5) einen vorgegebenen Zeitrahmen überschreitet.

10. Frequenzumrichter nach einem der vorhergehenden Ansprüche,
**dadurch gekennzeichnet,**
**dass** die Leistungsschalter(6,6',7,7') Leistungshalbleiter, wie MOSFETs oder IGBTs sind.

## Claims

1. Frequency converter, in particular for an electric motor, comprising an electronic control unit (17) for controlling power switches (6, 6', 7, 7') in at least one half-bridge, wherein at least one of the power switches (6, 6') receives its drive power from a bootstrap capacitor (15, 15'), and this power switch or another one of the power switches can be clocked by the electronic control unit (17), in particular for rotational speed control,
**characterized**
**in that** the electronic control unit (17), after a turn-off of all the power switches (6, 6', 7, 7') for the commutation of the motor current, detects whether the motor current is flowing in the forward direction of the power switches (6, 6', 7, 7') or in the direction opposite thereto, and in that the electronic control unit (17) suppresses the clocking of the power switch (6, 6') driven via the bootstrap capacitor (15, 15') as long as the motor current flows in the direction opposite to the forward direction.

2. Frequency converter according to Claim 1,
**characterized**
**in that** the electronic control unit (17) detects the current flow direction from a measurement of the voltage of the terminals (VOUT, VOUT') of the motor winding (1).

3. Frequency converter according to Claim 1 or 2,
**characterized**
**in that** the current flows in the direction opposite to the forward direction via a freewheeling diode (18, 18', 19, 19'), which is connected in parallel with the power switch (6, 6', 7, 7'), or through the power switch (6, 6', 7, 7') in the inverse operation mode.

4. Frequency converter according to any of the preceding claims,
**characterized**
**in that** the electronic control unit (17) drives the upper power switch (6; 6') - fed by the bootstrap capacitor (15, 15') - of one half-bridge statically and in non-clocking fashion during the motor current commutation and it identifies a current flow in the direction opposite to the forward direction by virtue of the fact that it measures a voltage below a threshold value (GND) when the upper and lower power switches (6', 7'; 6, 7) of the other half-bridge are turned off.

5. Frequency converter according to any of the preceding claims,
**characterized**
**in that** the electronic control unit (17) drives the upper power switch (6; 6') - fed by the bootstrap capacitor (15, 15') - of one half-bridge statically and in non-clocking fashion during the motor current commutation and it identifies the end of a current flow in the direction opposite to the forward direction by virtue of the fact that it measures a voltage above a threshold value (GND) when the upper and lower power switches (6', 7'; 6, 7) of the other half-bridge are turned off.

6. Frequency converter according to any of the preceding claims,
**characterized**
**in that** the bootstrap capacitor (15, 15') is recharged during the commutation.

7. Frequency converter according to Claim 6,
**characterized**
**in that** the recharging is effected cyclically at regular time intervals.

8. Frequency converter according to Claim 6 or 7,
**characterized**
**in that** the recharging is additionally effected directly before the beginning of the clocked driving of the power semiconductor.

9. Frequency converter according to any of the preceding claims,
**characterized**
**in that** the electronic control unit (17) triggers a safety shutdown if the suppression of clocking (instants t1 to t5) exceeds a predetermined time frame.

10. Frequency converter according to any of the preceding claims,
**characterized**
**in that** the power switches (6, 6', 7, 7') are power semiconductors such as MOSFETs or IGBTs.

## Revendications

1. Convertisseur de fréquence, en particulier pour moteur électrique, qui présente une électronique de commande (17) qui commande des commutateurs de puissance (6, 6', 7, 7') raccordés en au moins un demi-pont, au moins l'un des commutateurs de puissance (6, 6') recevant sa puissance de commande d'un condensateur d'amplificateur à contre-réaction (15, 15'), ce commutateur de puissance ou un autre des commutateurs de puissance pouvant être cadencés par l'électronique de commande (17) en particulier pour commander la vitesse de rotation,
**caractérisé en ce que**

pour commuter le courant du moteur après un blocage de tous les commutateurs de puissance (6, 6', 7, 7'), l'électronique de commande (17) détecte si le courant du moteur s'écoule dans la direction passante des commutateurs de puissance (6, 6' 7, 7') ou en opposition à cette direction et **en ce que** l'électronique de commande (17) interrompt le cadençage du commutateur de puissance (6, 6') commandé par le condensateur d'amplificateur à contre-réaction (15, 15') tant que le courant du moteur s'écoule dans le sens opposé au sens passant.

2. Convertisseur de fréquence selon la revendication 1, **caractérisé en ce que** l'électronique de commande (17) détecte le sens d'écoulement du courant à partir d'une mesure de la tension aux bornes (VOUT, VOUT') de l'enroulement (1) du moteur.

3. Convertisseur de fréquence selon les revendications 1 ou 2, **caractérisé en ce que** dans le sens opposé au sens passant, le courant s'écoule par une diode passante (18, 18', 19, 19') raccordée en parallèle au commutateur de puissance (6, 6', 7, 7') ou par les commutateurs de puissance (6, 6', 7, 7') en fonctionnement dans le sens opposé.

4. Convertisseur de fréquence selon l'une des revendications précédentes, **caractérisé en ce que** lors de la commutation du courant du moteur, l'électronique de commande (17) commande statiquement et de manière non cadencée le commutateur de puissance supérieur (6; 6'), alimenté par le condensateur (15, 15') d'amplification à contre-réaction, d'un des demi-ponts, et détecte que le courant s'écoule en opposition au sens passant lorsqu'il mesure une tension inférieure à une valeur de seuil (GND) lorsque le commutateur de puissance supérieur et le commutateur de puissance inférieur (6', 7'; 6, 7) de l'autre demi-pont sont bloqués.

5. Convertisseur de fréquence selon l'une des revendications précédentes, **caractérisé en ce que** lors de la commutation du courant du moteur, l'électronique de commande (17) commande statiquement et de manière non cadencée le commutateur de puissance supérieur (6; 6'), alimenté par le condensateur (15, 15') d'amplification à contre-réaction, d'un des demi-ponts, et détecte la fin de l'écoulement du courant dans le sens opposé au sens passant lorsqu'il mesure une tension supérieure à une valeur de seuil (GND) lorsque le commutateur de puissance supérieur et le commutateur de puissance inférieur (6', 7'; 6, 7) de l'autre demi-pont sont bloqués.

6. Convertisseur de fréquence selon l'une des revendications précédentes, **caractérisé en ce que** le condensateur d'amplification à rétroaction (15, 15') est rechargé pendant la commutation.

7. Convertisseur de fréquence selon la revendication 6, **caractérisé en ce que** le rechargement s'effectue cycliquement à des intervalles réguliers.

8. Convertisseur de fréquence selon les revendications 6 ou 7, **caractérisé en ce que** le rechargement s'effectue de plus immédiatement avant le début de la commande cadencée du semi-conducteur de puissance.

9. Convertisseur de fréquence selon l'une des revendications précédentes, **caractérisé en ce que** l'électronique de commande (17) déclenche un débranchement de sécurité lorsque la suppression du cadençage (instants t1 à t5) déborde d'une fenêtre temporelle prédéterminée.

10. Convertisseur de fréquence selon l'une des revendications précédentes, **caractérisé en ce que** les commutateurs de puissance (6, 6', 7, 7') sont des semiconducteurs de puissance, par exemple des MOSFET ou des IGBT.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19817767 A1
- DE 19641840 A1
- US 5627460 A
- US 5408150 A
- US 54081150 A